# EUROPÄISCHE PATENTANMELDUNG

(11) **EP 2 592 401 A1**
(43) Veröffentlichungstag der Anmeldung: **15.05.2013**
(21) Anmeldenummer: 11401626.4
(22) Anmeldetag: 09.11.2011
(51) Int. Cl.: G01J 3/02, G01J 3/10, G01N 21/35, H01K 1/52

(54) **Auf Platin basierende Infrarotlichtquelle für die Gasdetektion**

(71) Anmelder: Axetris AG, 6056 Kägiswil (CH)
(72) Erfinder: Dubochet, Olivier, 6056 Kägiswil (CH); Krebs, Stefan, 6055 Alpnach (CH)
(74) Vertreter: Klocke, Peter

(57) **Zusammenfassung**

Infrarotlichtquelle (1) für die Gasdetektion, mit einem Dünnschicht-Infrarotstrahler (2), der im Innenraum (9) eines Schutzgehäuses (3) angeordnet ist, das eine Tragefläche (4) für den Infrarotstrahler (2) und der Tragefläche (4) mit Abstand gegenüberliegend ein Austrittsfenster (7) für Infrarotstrahlung aufweist. Erfindungsgemäß ist vorgesehen, dass der Dünnschicht-Infrarotstrahler (2) eine Platinschicht aufweist und dass von dem Innenraum (9) des Schutzgehäuses (3) mindestens ein Entgasungskanal (10) mit einer Eintrittsöffnung (11) und einer Austrittsöffnung (12) nach außen führt. Für unkritische Anwendungen ist der Entgasungskanal (10) unverschlossen, für kritische Anwendungen kann er mittels einer wasserundurchlässigen, wasserdampfdurchlässigen und gasdiffusionsoffenen Dichtungsmembran (15) abgedichtet sein, wobei die Dichtungsmembran (15) vorzugsweise semipermeabel ausgebildet ist.

## Beschreibung

Die Erfindung betrifft eine Infrarotlichtquelle für die Gasdetektion mit einem Dünnschicht-Infrarotstrahler, der im Innenraum eines Schutzgehäuses angeordnet ist, das eine Tragefläche für den Infrarotstrahler und der Tragefläche mit Abstand gegenüberliegend ein Austrittsfenster für Infrarotstrahlung aufweist.

Die Verwendung der Infrarot-Spektroskopie zur Detektion bzw. Analyse von Gasen ist wohlbekannt. Sie umfasst im Wesentlichen das Aussenden von Infrarotstrahlung vor einer optischen Übertragungsstrecke und die optische Detektion dieser Strahlung nach der Übertragungsstrecke. Bei der optischen Detektion der Infrarot-Absorptionsanalyse wird die Tatsache ausgenutzt, dass bei der Anwesenheit eines zu detektierenden Zielgases im Bereich der Übertragungsstrecke ein bestimmter für das Zielgas spezifischer Spektralbereich des Infrarotlichtes deutlich gedämpft wird. Ein für die Infrarot-Spektroskopie geeigneter Gassensor für die optische Detektion von Zielgasen besteht üblicherweise aus einer Infrarotstrahlungsquelle sowie einem Infrarotstrahlungsdetektor, die beidseits der optischen Übertragungsstrecke angeordnet sind. Innerhalb der Übertragungsstrecke, auch Absorptionsstrecke genannt, werden abhängig von dem Gas oder Gasgemisch im Bereich der Absorptionsstrecke bestimmte Wellenlängen der Infrarotstrahlung absorbiert, wobei die Stärke der Absorption von der Konzentration des Zielgases abhängig ist. Die Gasselektivität eines derartigen optischen Gassensors für ein Zielgas wird dadurch erreicht, dass entweder eine schmalbandig emittierende Infrarotstrahlungsquelle, die nur in dem speziellen Wellenlängenbereich des Zielgases abstrahlt, oder eine breitbandig emittierende Infrarotstrahlungsquelle verwendet wird, wobei dann in der Absorptionsstrecke ein Transmissionsfilter für die spezielle Wellenlänge vorhanden ist.

Als breitbandig strahlende Infrarotlichtquellen hoher Leistung sind beispielsweise auf Platin basierende Infrarotstrahler bekannt. Solche Infrarotstrahler sind in der Regel monolithisch aufgebaut und weisen ein Teilstück eines Silicium-Wafers mit einer Membran auf, die mit einer Siliziumnitridschicht ausgebildet ist, und eine dünne beheizbare Platinschicht trägt, die über eine Dünnschicht aus Tantal, Titanium, Chromium und/oder eine davon haftend mit der Siliziumnitridschicht verbunden ist. Zum Schutz des Infrarotstrahlers vor Umwelteinflüssen werden derartige Dünnschicht-Infrarotstrahler üblicherweise gekapselt verwendet, das heißt in einem hermetisch verschlossenen Schutzgehäuse angeordnet. Als Schutzgehäuse sind zum Beispiel TO-Gehäuse bekannt, die einen Boden als Tragefläche für den Dünnschicht-Infrarotstrahler und dem Boden gegenüberliegend ein hermetisch abgedichtetes Austrittsfenster für die von dem Infrarotstrahler ausgehende Infrarotstrahlung aufweisen.

Es wurde festgestellt, dass hermetisch verschlossene IR-Lichtquellen beim Betrieb in der Nähe der vorgesehenen Nominalleistung nach relativ kurzer Betriebszeit zerstört werden, indem die Platinschicht von der Dünnschichtmembran aus Siliziumnitrid delaminiert. Der Zerstörungsprozess ist temperaturabhängig, d. h. er wird von höheren Betriebstemperaturen begünstigt. Nicht hermetisch verpackte Infrarotlichtquellen sind von diesem Problem nicht betroffen.

Es konnte nachgewiesen werden, dass eine erhöhte Wasserstoffkonzentration innerhalb des hermetisch dichten Gehäuses ursächlich für die Delaminierung und die anschließende Zerstörung der Platinschicht verantwortlich ist. Der schädliche Wasserstoff ist im Siliziumchip der Infrarotlichtquelle sowie in den Metallteilen des Schutzgehäuses eingelagert. Nach dem hermetischen Verpacken der Infrarotlichtquelle wird dieser Wasserstoff kontinuierlich durch Ausgasen freigesetzt und kann bei gasdichten Gehäusen Konzentrationen von bis zu 0,5 % erreichen. Der freie Wasserstoff wird insbesondere beim Betrieb der Infrarotlichtquelle katalytisch an der Platinschicht in atomaren Wasserstoff gespalten, welcher durch die Platinschicht diffundiert, die darunter liegende Tantalpentoxidschicht oder andere darunter angeordnete Schichten reduziert und Wasser als Reaktionsprodukt bildet. Das entstandene Wasser ist aufgrund der hohen Betriebstemperatur des Infrarotstrahlers in Gasform zwischen der Membran und der Platinschicht mit hohem Gasdruck eingeschlossen, was zur Ablösung der Platinschicht von der Membran und damit zu einer Zerstörung der Infrarotlichtquelle führt.

Ein hermetisches Verpacken der Infrarotlichtquelle unter Schutzgas löst dieses Problem nicht, da das Ausgasen des Wasserstoffes unabhängig von den anderen Gasen innerhalb des hermetisch dichten Gehäuses abläuft. Ebenso ist das Einbringen eines Getter-Materials für Wasserstoff, wie aus der Offenlegungsschrift US 2004/238 763 A1 bekannt, in das Schutzgehäuse nur bedingt zielführend, da die Dimensionierung des Getters für die erforderliche Lebensdauer der Infrarotlichtquelle problematisch und der Einbau eines derartigen Getters mit einem hohen Platzbedarf verbunden ist. Ein solches Getter stellt einen zusätzlichen hohen Kostenfaktor bei der Herstellung der Infrarotlichtquelle dar.

Auch das hermetische Verpacken der Infrarotlichtquelle mit Luft als Füllgas für das Schutzgehäuse unterbindet die Zerstörung der Platinschicht nicht. Es wird nur die Delaminierung der Platinschicht verlangsamt, da der atomare Wasserstoff direkt mit dem molekularen Sauerstoff des Füllgases zu Wasser reagieren kann, welches nicht zwischen der Platinschicht und der Membran eingeschlossen ist. Bei den hohen Betriebstemperaturen der Infrarotlichtquelle tritt jedoch eine Oxidierung der organischen Klebstoffe, die zum Beispiel für das Aufkleben des Infrarotstrahlers auf die Tragefläche verwendet werden, zu Kohlendioxid auf, dessen Konzentration bis zu 9 % erreichen kann. Die steigenden Kohlendioxid- und Wasserdampfkonzentrationen innerhalb des Schutzgehäuses machen die Verwendung der Infrarotlichtquelle beispielsweise für driftfreie Feuchtigkeits- oder CO₂-Sensoren ungeeignet. Zudem tritt nach Erreichen der maximalen CO₂-Konzentration die bereits vorstehend beschriebene Zerstörung auf, da der gasförmige Sauerstoff verbraucht ist und infolgedessen die Reduktion der Tantalpentoxidschicht einsetzt.

Ausgehend von dem vorstehend beschriebenen Stand der Technik liegt der Erfindung die Aufgabe zugrunde, eine Möglichkeit vorzuschlagen, die insbesondere eine Zerstörung der Infrarotlichtquelle beim Betrieb mit Nominalleistung zuverlässig verhindert, wobei einer erhöhten Wasserstoffkonzentration im Schutzgehäuse der Infrarotlichtquelle ohne den Einsatz von Getter-Material vorgebeugt werden soll.

Diese Aufgabe wird erfindungsgemäß durch eine Infrarotlichtquelle mit den Merkmalen des unabhängigen Patentanspruchs 1 gelöst. Weitere vorteilhafte Ausgestaltungen sind den rückbezogenen Patentansprüchen zu entnehmen.

Danach ist bei der erfindungsgemäßen Infrarotlichtquelle, die einen Dünnschicht-Infrarotstrahler mit einer dünnen Platinschicht aufweist, ein Entgasungskanal mit einer Eintrittsöffnung und mit einer Austrittsöffnung vorgesehen, der von dem Innenraum des ansonsten hermetisch abgedichteten Schutzgehäuses nach außen führt. Der Entgasungskanal ist konstruktiv definiert, d. h. in seiner Geometrie speziell ausgelegt und an besonders ausgewählten Stellen des Schutzgehäuses vorgesehen. Dabei ist die Eintrittsöffnung an einer Innenseite des Schutzgehäuses und die Austrittsöffnung an der Außenseite des Schutzgehäuses angeordnet, wobei sich der Entgasungskanal an einer beliebigen geeigneten Stelle des Schutzgehäuses erstrecken kann. Hierdurch können ausgegaster Wasserstoff, sich bildendes Kohlendioxid bzw. entstehender Wasserdampf beständig nach außen diffundieren, so dass es innerhalb des Schutzgehäuses zu keiner signifikanten Konzentrationserhöhung dieser gasförmigen Stoffe kommt. Dadurch wird sowohl der Zerstörung der Infrarotlichtquelle durch Wasserstoff als auch eine Verfälschung der Gasmessung durch die sich ändernde Wasserdampf- oder Kohlendioxid-Konzentration nachhaltig vermieden. Dabei ist die Querschnittsfläche des Entgasungskanals derart gewählt, dass insbesondere keine größeren Partikel aus der Umgebung in das Schutzgehäuse eindringen können, die sich im Innenraum zwischen der Platinschicht und dem Austrittsfenster ausbreiten oder sich auf der Platinschicht bzw. dem Austrittsfenster niederschlagen.

Bei einer Ausführungsform der Erfindung ist der Entgasungskanal, der einen typischen Querschnittsdurchmesser von 1 - 2 mm aufweist, unverschlossen. Eine derartige erfindungsgemäße Infrarotlichtquelle für die Gasdetektion kann beispielsweise für unkritische Anwendungen und/oder in einer Umgebung mit geringer Verschmutzung der umgebenden Atmosphäre verwendet werden.

Vorzugsweise ist die Austrittsöffnung und/oder die Eintrittsöffnung des Entgasungskanals an einer Fläche und/oder Kante des Schutzgehäuses angeordnet. Dabei kann der Entgasungskanal von einer Bohrung oder einer Ausfräsung gebildet sein. Er kann auch als definierte Unterbrechung eines Schweiß-, Frittierungs-, Klebe- oder Dichtungsabschnittes des Schutzgehäuses gestaltet sein.

Prinzipiell kann sich der bei der erfindungsgemäßen Infrarotlichtquelle vorgesehene Entgasungskanal zwischen der Eintritts- und der Austrittsöffnung geradlinig, einfach oder mehrfach gebogen bzw. abgewinkelt erstrecken. Auch eine Kombination solcher Erstreckungsabschnitte ist erfindungsgemäß vorgesehen. Die Erstreckungsrichtung des Entgasungskanales kann sich dabei einmal oder mehrmals in beliebiger Richtung ändern.

Bevorzugt wird eine Ausführungsform der erfindungsgemäßen Infrarotlichtquelle, bei der sich der Entgasungskanal zwischen der Eintrittsöffnung und der Austrittsöffnung labyrinthartig erstreckt. Das Austreten von Wasserstoff, Wasserdampf und/oder von Kohlendioxid aus dem Innenraum des Schutzgehäuses wird dadurch nur unwesentlich beeinflusst, während das Eindringen von Gasen von außen, die in der Regel auch Schmutzpartikel mit sich führen, deutlich erschwert wird. Etwaige Schmutzpartikel lagern sich dabei vorteilhafterweise an den Wänden des Entgasungskanals ab und gelangen so nicht in den Innenraum und mit dem Infrarotstrahler in Kontakt.

Für kritischere Anwendungen, beispielsweise in einem stark staub- und/oder feuchtebelasteten Umfeld, ist der Entgasungskanal vorzugsweise mittels einer wasserundurchlässigen, wasserdampfdurchlässigen und gasdiffusionsoffenen Dichtungsmembran abgedichtet. Als Dichtungsmembran kann in diesem Zusammenhang beispielsweise eine unter dem Handelsnamen "Gore-Tex" bekannte Membran benutzt werden. "Gore-Tex" ist eine aus Polytetrafluorethylen bestehende wasserundurchlässige und dampfdiffusionsoffene und damit auch gasdiffusionsoffene Membran, die hauptsächlich in der Bekleidungsindustrie zur Herstellung von Funktionstextilien verwendet wird, und eine luftdurchlässige gitterartige Struktur aufweist.

Für spezielle kritische Anwendungen, bei denen sicher verhindert werden muss, dass das Zielgas oder andere aggressive Gase aus dem Umfeld in das Schutzgehäuse der erfindungsgemäßen Infrarotlichtquelle eindringen, ist die Dichtungsmembran vorzugsweise als semipermeable Membran ausgebildet, die beispielsweise aus Kapton, Teflon oder Silcion hergestellt ist. Mit Semipermeabilität bezeichnet man die Eigenschaft von substanziellen oder physikalischen Grenzflächen, oft Membranen, halbdurchlässig oder teilweise durchlässig zu sein. Von derartigen Membranen werden nur Moleküle unterhalb einer bestimmten Größe und damit unterhalb einer bestimmten Masse durchgelassen.

Des weiteren kann die Dichtmembran auch als dünne Metallfolie ausgeführt werden. Speziell Wasserstoff ist dafür bekannt, durch solche Metallfolien hindurch zu diffundieren, während größere Moleküle dies nicht können. Die Metallfolie kann zu diesem Zweck aufgeklebt oder aufgelötet werden.

Die verwendeten Dichtungsmembranen können als flache Scheibe oder als räumliche, sich vorzugsweise in alle Raumrichtungen gleichermaßen erstreckende Gebilde ausgeführt sein. In einer bevorzugten Ausführungsform der Erfindung ist die Dichtungsmembran scheibenförmig flach ausgebildet und außen an der Austrittsöffnung des Entgasungskanals angeordnet und dort fixiert. In einer anderen Ausführungsform ist die Dichtungsmembran identisch flach ausgebildet, jedoch im Entgasungskanal angeordnet und dort fixiert. Die Fixierung erfolgt dabei an dem Rand der scheibenförmigen Dichtungsmembran, beispielsweise durch Kleben oder Klemmen. Zum Klemmen ist ein Gegenlager notwendig, das von einer Ringstufe in dem Entgasungskanal gebildet sein kann. Die Dichtungsmembran wird vorzugsweise mit einem rohrförmigen Einpressteil an die Ringstufe angepresst und hierbei geklemmt.

Bei einer weiteren vorteilhaften Variante der erfindungsgemäßen Infrarotlichtquelle ist die Dichtungsmembran patronenförmig ausgebildet und im Entgasungskanal teilweise oder vollständig aufgenommen und dort fixiert. Unabhängig von der speziellen Ausführungsform als flache Scheibe oder als dreidimensionale Patrone ist die Dichtungsmembran jeweils außen dichtend mit dem Entgasungskanal verbunden.

Das Schutzgehäuse der erfindungsgemäßen Infrarotlichtquelle kann zum Verbinden mit einer Leiterplatte im Hinblick auf die mechanische Befestigung und die elektrische Kontaktierung zwei prinzipiell unterschiedliche Ausführungsformen aufweisen. Es kann entweder mit elektrischen Anschlussdrähten für die Durchsteckmontage auf der Leiterplatte ausgeführt sein oder mit elektrischen Anschlussstreifen für die Oberflächenmontage auf der Leiterplatte. Sofern die Austrittsöffnung des Entgasungskanals auf einer der Leiterplatte zugewandten Fläche oder an einer entsprechend zugeordneten Kante angeordnet ist und das Schutzgehäuse im auf der Leiterplatte montierten Zustand einen geringen oder keinen Abstand zu der Leiterplatte aufweist, ist es von Vorteil, wenn die Leiterplatte der Austrittsöffnung des Entgasungskanals gegenüberliegend ein Loch aufweist, durch das der Entgasungskanal mit dem Umfeld ungestört kommunizieren kann. Dabei kann das Schutzgehäuse für die konventionelle Montage beispielsweise als Transistor-Outline-Gehäuse und für die Oberflächenmontage als Dual-Inline-Gehäuse ausgeführt sein. In beiden Fällen kann das Schutzgehäuse Strahlformungselemente für die Infrarotstrahlung aufweisen, die in das Schutzgehäuse innen integriert oder außen adaptiert sind.

Nachfolgend wird die Erfindung anhand mehrerer in der Zeichnung dargestellter Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale der Erfindung können dabei für sich allein oder zu mehreren bei unterschiedlichen Ausführungsformen der Erfindung verwirklicht sein. Es zeigen:
- Figur 1: ein erstes Ausführungsbeispiel einer erfindungsgemäßen Infrarotlichtquelle, mit einem Schutzgehäuse für die Durchsteckmontage auf Leiterplatten, wobei der Entgasungskanal an einer Bodenfläche eines TO-Gehäuses randfern angeordnet ist;
- Figur 2: ein zweites Ausführungsbeispiel einer erfindungsgemäßen Infrarotlichtquelle, mit einem Schutzgehäuse für die Durchsteckmontage auf Leiterplatten, wobei der Entgasungskanal an einer Bodenfläche eines TO-Gehäuses randnah angeordnet ist;
- Figur 3: das Ausführungsbeispiel aus Figur 1 mit flacher Dichtungsmembran zum Verschluss des Entgasungskanals, die außen an der Austrittsöffnung des Entgasungskanals angeordnet und dort rundum befestigt ist;
- Figur 4: das Ausführungsbeispiel aus Figur 1 mit einer flachen Dichtungsmembran zum Verschluss des Entgasungskanals, die in dem Entgasungskanal angeordnet und dort rundum an einer Ringstufe klemmend fixiert ist; und
- Figur 5: das Ausführungsbeispiel aus Figur 1 mit einer als Patrone ausgebildeten Dichtungsmembran, die im Entgasungskanal aufgenommen und dort am Außenumfang durch Pressen fixiert ist.

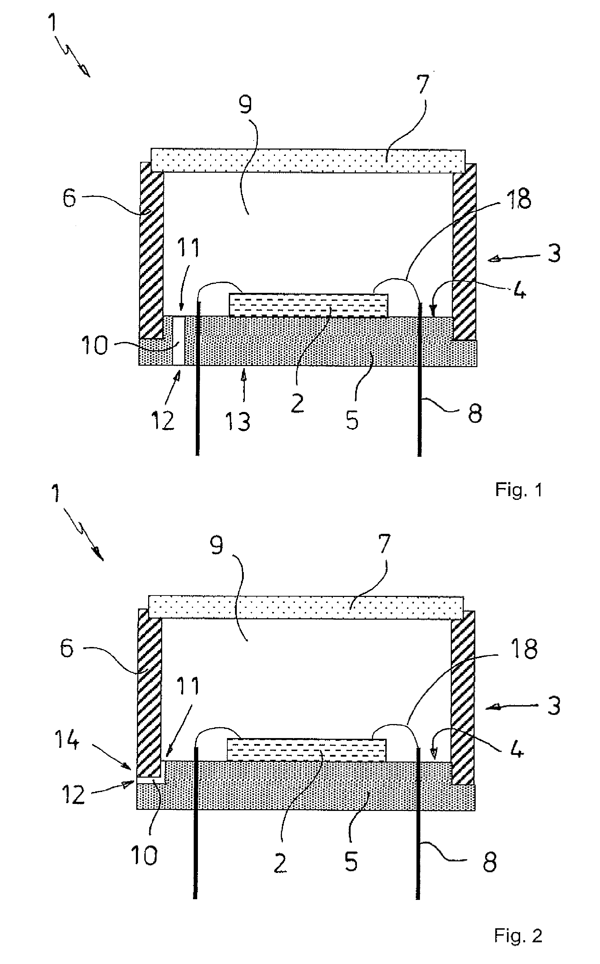

Die Figuren 1 bis 5 zeigen die vorstehend gelisteten Ausführungsformen der erfindungsgemäßen Infrarotlichtquelle 1 für die Gasdetektion jeweils in einer Längsschnittdarstellung in schematischer Weise. Dabei ist ein Dünnschicht-Infrarotstrahler 2 in einem weitgehend hermetisch abgedichteten Schutzgehäuse 3 auf einer Tragfläche 4 angeordnet und dort durch Kleben befestigt. Das Schutzgehäuse 3 ist als Transistor-Outline-Gehäuse ausgebildet und weist einen Boden 5, eine Seitenwand 6 und dem Boden 5 gegenüberliegend ein Infrarot durchlässiges Austrittsfenster 7 auf, die miteinander dichtend, insbesondere gasdicht verbunden sind. Durch den Boden 5 sind elektrische Anschlussdrähte 8 in den Innenraum 9 des Schutzgehäuses 3 geführt, die mit elektrischen Verbindungsleitungen 18 mit dem auf der Tragefläche 4 angeordneten Dünnschicht-Infrarotstrahler 2 verbunden sind. Neben dem Infrarotstrahler 2 ist ein Entgasungskanal 10 mit einer dem Innenraum 9 zugeordneten Eintrittsöffnung 11 an einem Ende und mit einer Austrittsöffnung 12 am anderen Ende angeordnet.

Der Entgasungskanal 10 führt von dem Innenraum 9 des Schutzgehäuses 3 nach außen. Er ist in den Figuren 1 und 2 offen ausgebildet. Figur 1 zeigt einen derartigen Entgasungskanal 10, der als Bohrung ausgeführt ist und sich somit geradlinig zwischen der Eintrittsöffnung 11 und der Austrittsöffnung 12 randfern durch den Boden 5 des Schutzgehäuses 3 und damit mit seitlichem Abstand zu der Seitenwand 6 des Schutzgehäuses 3 erstreckt. Der Boden 5 bildet eine Fläche 13 des Schutzgehäuses 3. Figur 2 zeigt eine Variante eines solchen Entgasungskanals 10, der von einander zugeordneten randseitigen Ausfräsungen des Bodens 5 und der Seitenwand 6 gebildet ist. Die Ausfräsungen bilden eine definierte Unterbrechung an einer seitlichen Kante 14 des Schutzgehäuses 3, an der die Seitenwand 6 und der Boden 5 ansonsten dichtend miteinander verbunden sind. Der Entgasungskanal 10 ist in diesem Fall einfach abgewinkelt ausgeführt.

Durch den offenen Entgasungskanal 10, der einen typischen Durchmesser von etwa 1 - 2 mm aufweist, kann Wasserstoff, Wasserdampf oder Kohlendioxid, die beim Betreiben der auf Platin basierenden Infrarotlichtquelle entstehen und sich ohne Entgasungskanal 10 in dem Innenraum 9 mit hoher Konzentration und hohem Überdruck ansammeln würden, problemlos nach außen abgeleitet werden. Dabei ist die Länge und die Form des Entgasungskanals 10 zwischen der Eintrittsöffnung 11 und der Austrittsöffnung 12 von untergeordneter Bedeutung.

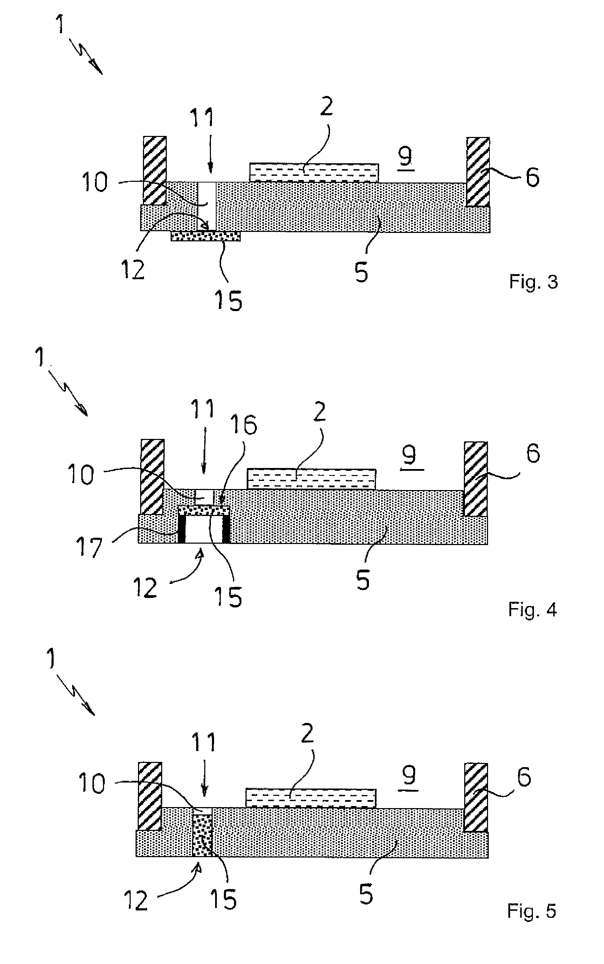

Die Figuren 3 bis 5 zeigen das Ausführungsbeispiel aus Figur 1 modifiziert, wobei der Entgasungskanal 10 mit einer wasserundurchlässigen und feuchtigkeits- und gasdiffusionsoffenen Dichtungsmembran 15 verschlossen ist, die vorzugsweise semipermeabel ausgebildet ist. Bei den in den Figuren 3, 4 abgebildeten Ausführungsformen ist die Dichtungsmembran 15 als ebene flache Scheibe ausgebildet, bei der in Figur 5 dargestellten Ausführungsform ist die Dichtungsmembran 15 hingegen zu einer dreidimensionalen Patrone geformt. Die Dichtungsmembran 15 verschließt den Entgasungskanal 10 insbesondere in Richtung von der Austrittsöffnung 12 zu der Eintrittsöffnung 11, so dass abhängig von dem für die Dichtungsmembran 15 gewählten Material das Eindringen von Wasser, Wasserdampf und Gasen in sauberer und verunreinigter Form in den Innenraum 9 des Schutzgehäuses 3 verhindert ist. In umgekehrter Richtung, d. h. von der Eintrittsöffnung 11 zu der Austrittsöffnung 12 können Gase oder Wasserdampf ungehindert aus dem Innenraum 9 nach außen diffundieren.

Bei der Variante gemäß Figur 3 ist die Dichtungsmembran außen an dem Boden 5 die Austrittsöffnung 12 übergreifend angeordnet. Sie ist randseitig mit dem Boden 5 verklebt. Bei der Variante gemäß Figur 4 ist die Dichtungsmembran 15 im Entgasungskanal 10 angeordnet und dort durch Klemmen fixiert. Dazu ist der Entgasungskanal 10 mit einer Ringstufe 16 ausgebildet, an der die Dichtungsmembran 15 randseitig in Anlage ist. Sie wird von einem Einpressteil 17 an die Ringstufe 16 angepresst. Bei der Variante gemäß Figur 5 ist die patronenförmig ausgebildete Dichtungsmembran 15 im Entgasungskanal 10 aufgenommen und mittels eines Presssitzes fixiert.

## Patentansprüche

1. Infrarotlichtquelle (1) für die Gasdetektion, mit einem Dünnschicht-Infrarotstrahler (2), der im Innenraum (9) eines Schutzgehäuses (3) angeordnet ist, das eine Tragefläche (4) für den Dünnschicht-Infrarotstrahler (2) und der Tragfläche (4) mit Abstand gegenüberliegend ein Austrittsfenster (7) für Infrarotstrahlung aufweist, **dadurch gekennzeichnet, dass** der Dünnschicht-Infrarotstrahler (2) eine Platinschicht aufweist und dass von dem Innenraum (9) des Schutzgehäuses (3) mindestens ein konstruktiv definierter Entgasungskanal (10) mit einer Eintrittsöffnung (11) und mit einer Austrittsöffnung (12) nach außen führt.

2. Infrarotlichtquelle nach Anspruch 1, **dadurch gekennzeichnet, dass** die Eintrittsöffnung (11) und/oder die Austrittsöffnung (12) des Entgasungskanals (10) an einer Fläche (13) und/oder einer Kante (14) des Schutzgehäuses (3) angeordnet ist.

3. Infrarotlichtquelle nach Anspruch 1 oder 2, **dadurch gekennzeichnet, dass** der Entgasungskanal (10) von einer Bohrung oder einer Ausfräsung gebildet ist.

4. Infrarotlichtquelle nach einem der vorstehenden Ansprüche, **dadurch gekennzeichnet, dass** der Entgasungskanal (10) von einer definierten Unterbrechung eines Schweiß-, Frittierungs-, Klebe- oder Dichtungsabschnittes des Schutzgehäuses (3) gebildet ist.

5. Infrarotlichtquelle nach einem der vorstehenden Ansprüche, **dadurch gekennzeichnet, dass** sich der Entgasungskanal (10) zwischen der Eintrittsöffnung (11) und der Austrittsöffnung (12) labyrinthartig erstreckt.

6. Infrarotlichtquelle nach einem der vorstehenden Ansprüche, **dadurch gekennzeichnet, dass** der Entgasungskanal (10) mittels einer wasserundurchlässigen, wasserdampfdurchlässigen und gasdiffusionsoffenen Dichtungsmembran (15) abgedichtet ist.

7. Infrarotlichtquelle nach einem der vorstehenden Ansprüche, **dadurch gekennzeichnet, dass** die Dichtungsmembran (15) semipermeabel ausgebildet ist.

8. Infrarotlichtquelle nach Anspruch 6 oder 7, **dadurch gekennzeichnet, dass** die Dichtungsmembran (15) scheibenförmig flach ausgebildet und außen an der Austrittsöffnung (12) angeordnet und fixiert ist.

9. Infrarotlichtquelle nach Anspruch 6 oder 7, **dadurch gekennzeichnet, dass** die Dichtungsmembran (15) scheibenförmig flach ausgebildet und im Entgasungskanal angeordnet und fixiert ist.

10. Infrarotlichtquelle nach Anspruch 6 oder 7, **dadurch gekennzeichnet, dass** die Dichtungsmembran (15) patronenförmig ausgebildet und innen im Entgasungskanal (10) aufgenommen und fixiert ist.

11. Infrarotlichtquelle nach einem der vorstehenden Ansprüche, **dadurch gekennzeichnet, dass** die Dichtungsmembran (15) als dünne Metallfolie ausgebildet ist.

12. Infrarotlichtquelle nach Anspruch 11, **dadurch gekennzeichnet, dass** die Dichtungsmembran (15) an der Austrittsöffnung (12) aufgelötet ist.

13. Infrarotlichtquelle nach einem der vorstehenden Ansprüche, **dadurch gekennzeichnet, dass** das Schutzgehäuse (3) mit elektrischen Anschlussdrähten (8) für die Durchsteckmontage auf einer Leiterplatte ausgeführt ist.

14. Infrarotlichtquelle nach einem der vorstehenden Ansprüche 1 bis 10, **dadurch gekennzeichnet, dass** das Schutzgehäuse (3) mit elektrischen Anschlussstreifen für die Oberflächenmontage auf einer Leiterplatte ausgeführt ist.
